# EUROPÄISCHE PATENTANMELDUNG

(11) **EP 2 617 638 A2**
(43) Veröffentlichungstag der Anmeldung: **24.07.2013**
(21) Anmeldenummer: 13151928.2
(22) Anmeldetag: 18.01.2013
(51) Int. Cl.: B62M 6/60, B62K 3/00

(54) **Trainingsgerät**

(30) Priorität: 20.01.2012 DE 202012000563 U
(71) Anmelder: Hueber, Rolf, 81825 München (DE)
(72) Erfinder: Hueber, Rolf, 81825 München (DE)
(74) Vertreter: Patronus IP Patent- und Rechtsanwälte

(57) **Zusammenfassung**

Erfindungsgemäß ist ein Trainingsgerät vorgesehen. Dieses Trainingsgerät umfasst einen Zentralrahmen (6), zwei am Zentralrahmen angeordnete Hinterräder (16), eine Sitzvorrichtung (28), eine Lenkvorrichtung (14) mit Vorderradgabel (12), Lenkerschräglager (11) und Lenker (13). An der Lenkvorrichtung (14) ist ein Vorderrad (15) angeordnet. Weiterhin ist ein Fahrrad-Kurbelsystem (34) vorgesehen, das mit einem Generator (24) gekoppelt ist. Als Antrieb ist am Vorderrad (15) ein Radnaben-Elektromotor (17) vorgesehen.

## Beschreibung

Die vorliegende Erfindung betrifft ein Trainingsgerät.

Unter dem Namen Footloose ist ein zweirädriges E-Bike von der Firma Mando erhältlich. Dieses E-Bike umfasst einen zusammenklappbaren Rahmen aus Aluminium, sowie einen am Hinterrad angeordneten Motor. Dieses E-Bike verfügt über einen Antrieb ohne Kette. Ein Lithium-Ionen-Akku ist in den hinteren Teil des Rahmens integriert. Die beim Treten erzeugte mechanische Energie wird in einem Generator in elektrische Energie umgewandelt und direkt zum Laden des Akkus verwendet. Ein derartiger Antrieb wird als serieller Hybrid-Antrieb bezeichnet. Weiterhin ist ein Gashebel vorgesehen.

Die Firma MIFA bietet unter dem Namen X-Pesa ein zweirädriges E-Bike ohne Kettenantrieb an. Die Kraftübertragung erfolgt rein elektrisch. Der Fahrer tritt in Pedale, um einen Generator anzutreiben, welcher die mechanische Energie in elektrische Energie umwandelt. Über einen Akku wird die elektrische Energie direkt an einen am Hinterrad angeordneten Motor übertragen. Weiterhin ist eine Rekuperation möglich, das bedeutet, Bremsenergie kann in den Akku zurückgeleitet werden, um die Reichweite zu erhöhen. Zudem umfasst dieses E-Bike eine stufenlose, elektrische automatische Gangschaltung.

Aufgabe der vorliegenden Erfindung ist es, ein Trainingsgerät bereitzustellen, das sicher ist und insbesondere von bewegungseingeschränkten und älteren Menschen nutzbar ist, um deren Gesundheit und Mobilität zu verbessern.

Die Erfindung weist zur Lösung dieser Aufgabe die im Patentanspruch 1 angegebenen Merkmale auf. Vorteilhafte Ausgestaltungen sind in den Unteransprüchen angegeben.

Stationäre Geräte für Bewegungstraining sind selten geeignet für komplexe, den Körper in seiner Ganzheit fordernde, die motorische Koordination und den Stoffwechsel fördernde Übungen. Hierzu ist eher das Dreirad-Fahren im Freien geeignet, um Muskelarbeit durch Sauerstoffzufuhr sowie das unmittelbare Bewegungs- und Leistungsfeedback über längere Zeitdauer bzw. Distanzen zu unterstützen.

Dreirädrige Fahrräder der bekannten, üblichen Bauart mit hohen Sattelpositionen weisen entweder nach unten zu betätigende Tretkurbelsysteme mit Endlos-Ketten oder -Riemen zur Kraftübertragung an wenigstens einem Antriebsrad auf. Hohe Sitzpositionen, kombiniert mit zwei seitlich senkrecht angeordneten Hinterrädern bedingen jedoch erhöhte Kipprisiken und schwingende Instabilitäten beim Aufsteigen, Fahren und Absteigen und sind deshalb wenig geeignet für diese Nutzer-Klientel, da daraus entstehende Ängste und Gefahrenpotenziale in der Konsequenz die Verwendung derartiger Geräte vereiteln bzw. einschränken.

Alternativ zu klassischen Sattel-Dreirädern werden sportlich gestaltete Liegeräder angeboten, die keine ergonomisch funktionell gestalteten Sitze in physiologisch idealer Position bieten, durch den Verlauf von Antriebsketten im Einstiegsbereich zusätzlich über 40 cm hohe Rahmenelemente aufweisen und deshalb ebenfalls, wie auch die Hochsattelfahrräder, schwierig oder gar nicht zu be- und entsteigen sind.

Je funktioneller, trainingsphysiologisch geeigneter und motivierender neue Trainingsvorrichtungen sind, desto höher werden ihre Akzeptanz und der gesundheitliche Nutzen für diese Zielgruppe sein.

Erfindungsgemäß ist ein Trainingsgerät vorgesehen. Dieses Trainingsgerät umfasst einen Zentralrahmen, zwei am Zentralrahmen angeordnete Hinterräder, eine Sitzvorrichtung, eine Lenkvorrichtung mit Vorderradgabel, Lenkerschräglager und Lenker. An der Lenkvorrichtung ist ein Vorderrad angeordnet. Weiterhin ist ein Fahrrad-Kurbelsystem vorgesehen, das mit einem Generator gekoppelt ist. Als Antrieb ist am Vorderrad ein Radnaben-Elektromotor vorgesehen.

Das erfindungsgemäße Trainingsgerät ist für komplexe, den Körper in seiner Ganzheit fordernde, die motorische Koordination und den Stoffwechsel fördernde Übungen. Es bietet die Möglichkeit sowohl im Freien als auch Zuhause stationär zu trainieren, um Muskelarbeit durch Sauerstoffzufuhr sowie das unmittelbare Bewegungs - und Leistungsfeedback über längere Zeitdauer bzw. Distanzen zu unterstützen. Das Training Zuhause kann ohne zusätzlichen Hilfsmittel wie bspw. eine Rolle mit Wirbelstrombremse oder eine Stütz- bzw. Haltevorrichtung ausgeführt werden. Das Trainingsgerät ist somit gleichermaßen zum Trainieren im Freien als auch zum Heimtraining einsetzbar.

Dadurch, dass der Radnaben-Elektromotor am Vorderrad vorgesehen ist, verlaufen keine Antriebselemente, wie beispielsweise eine Kette oder ein Zahnriemen, in einem Einstiegsbereichs des Trainingsgerätes. Hierdurch kann der Einstieg ausgesprochen tief ausgebildet werden, was das Auf- und Absteigen auf das Trainingsgerät erheblich erleichtert. Als Einstiegsbereich wird ein Bereich zwischen Lenkvorrichtung und Sitzvorrichtung oberhalb des Zentralrahmens bezeichnet. Die Höhe des Zentralrahmens kann im Einstiegsbereich vom Boden aus zwischen 15 cm und 35 cm und insbesondere zwischen 20 cm und 30 cm betragen.

Zudem bewirkt der erfindungsgemäße Aufbau einen äußerst tiefen Schwerpunkt des Trainingsgerätes. Dies wirkt sich vorteilhaft auf die Stabilität, das Stand- und das Fahrverhalten sowie die Sicherheit aus.

Die Ausbildung als Dreirad mit zwei Hinterrädern und einem Vorderrad führt zu einer hohen Stabilität und verhindert ein Umfallen des Trainingsgeräts. Dadurch ist das Trainingsgerät insbesondere für ängstliche ältere Menschen geeignet.

Durch die Kombination eines Dreirades, insbesondere mit dem niedrigen Sitz im Bereich zwischen den beiden Hinterrädern, und dem mit dem Generator gekoppelten Kurbel-System wird ein sehr tiefer Schwerpunkt erzielt, weshalb es möglich ist, den Radnaben-Elektromotor am Vorderrad auch mit Rekuperation zu betreiben. Bei einem herkömmlichen Fahrrad mit hohem Schwerpunkt besteht die Gefahr, dass bei einer Bremsung des Vorderrades aufgrund der Rekuperation der Fahrer über das Vorderrad stürzt. Das Antreiben eines einzelnen Hinterrades macht wenig Sinn, da hierdurch seitliche Drehmomente erzeugt werden würden. Das Antreiben beider Hinterräder ist hingegen technisch sehr aufwändig, da bspw. ein Differential oder zwei elektronisch geregelte Radnaben-Elektromotoren notwendig sind. Beim erfindungsgemäßen Fahrrad sind hingegen die beiden Hinterräder frei laufend ausgebildet.

Der Zentralrahmen kann derart ausgebildet sein, dass die maximale Höhe eines Einstiegsbereichs in vertikaler Richtung in etwa im Bereich des Fahrrad-Kurbelsystems angeordnet ist.

Dadurch, dass das Fahrrad-Kurbelsystem in etwa in Fahrtrichtung im vorderen Bereich des Zentralrahmens angeordnet ist, kann der tiefste Punkt des Einstiegsbereichs bzw. die maximale Höhe des Einstiegsbereichs in vertikaler Richtung in etwa auf Höhe des Fahrrad-Kurbelsystems vorgesehen sein, was das Auf- und Absteigen, wie bereits vorstehend erläutert, erheblich erleichtert.

Ein Generator kann im Bereich zwischen Fahrrad-Kurbelsystem und dem Vorderrad angeordnet sein. In Fahrtrichtung hinter dem Generator befindet sich der Einstiegsbereich. Durch eine derartige Anordnung des Generators wird erreicht, dass keine Antriebselemente im Einstiegsbereich verlaufen.

Am Zentralrahmen im Bereich der Hinterräder kann eine schalenförmig ausgebildete Sitzvorrichtung vorgesehen sein, deren Position in Längsrichtung des Trainingsgeräts verstellbar ist.

Weiterhin können am Zentralrahmen zwei Hinterradschrägstellhalterungen vorgesehen sein. Durch die Schrägstellung der Hinterräder bzw. deren Sturz wird die Stabilität des Dreirads erheblich erhöht.

Die Schrägstellung der Hinterräder kann derart erfolgen, dass der Winkel zwischen einem Hinterrad und der Vertikalen in etwa 5° bis 12,5° bzw. 8° bis 11° und insbesondere in etwa 10° gegenüber der Vertikalen beträgt.

Durch die im Schutzanspruch 1 angegebenen Erfindung wird das Problem gelöst bzw. der für unsere immer älter werdende Gesellschaft zunehmende Bedarf erfüllt, ein mobiles elektrisch unterstütztes Aktivtrainingsgerät für motorisch, Stoffwechsel - und Herzkreislauf-bedingt Bewegungseingeschränkte bereitzustellen, das drinnen wie draußen ohne fremde Hilfe sicher nutzbar ist.

Mit der Erfindung wird erreicht, dass die Gesundheit, Lebensqualität, Selbständigkeit durch verbesserte Mobilität dieser Menschen positiv, kostengünstig und nachhaltig gesteigert wird.

Die Erfindung wird im Folgenden anhand der Zeichnungen näher erläutert. Diese zeigen in:
- Figur 1: eine Seitenansicht eines erfindungsgemäßen Trainingsgeräts,
- Figur 2: eine Draufsicht von hinten auf das Trainingsgerät gemäß Figur 1,
- Figur 3: einen Zentralrahmen des Trainingsgeräts in einer perspektivischen Ansicht, und
- Figur 4: ein Schaltbild eines Antriebs des Trainingsgerätes.

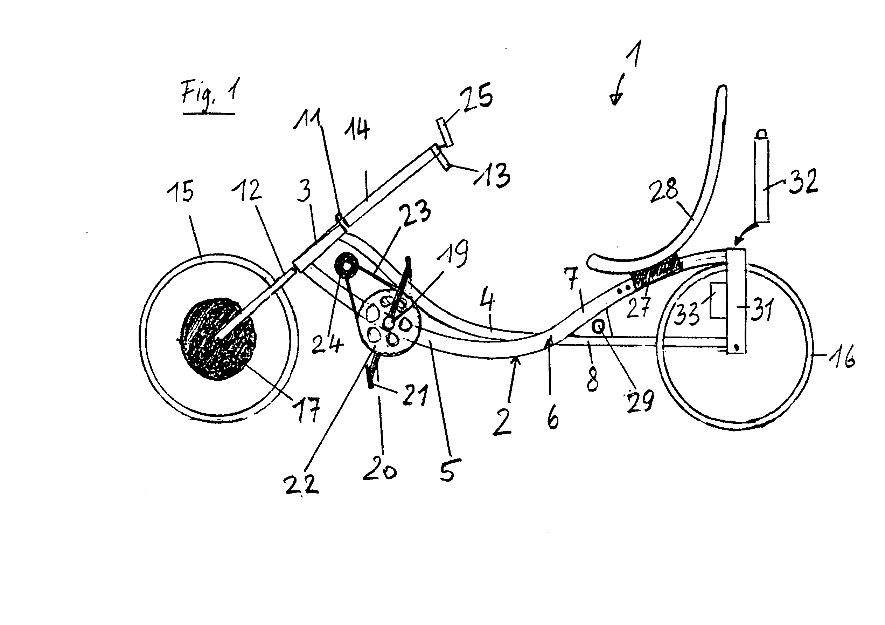

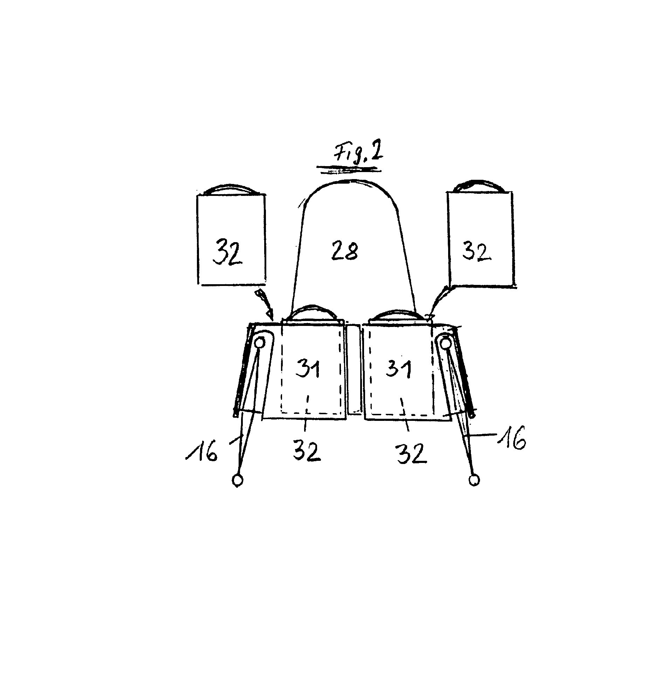

Im Folgenden wird ein Trainingsgerät 1 beschrieben (Figur 1 bis Figur 3).

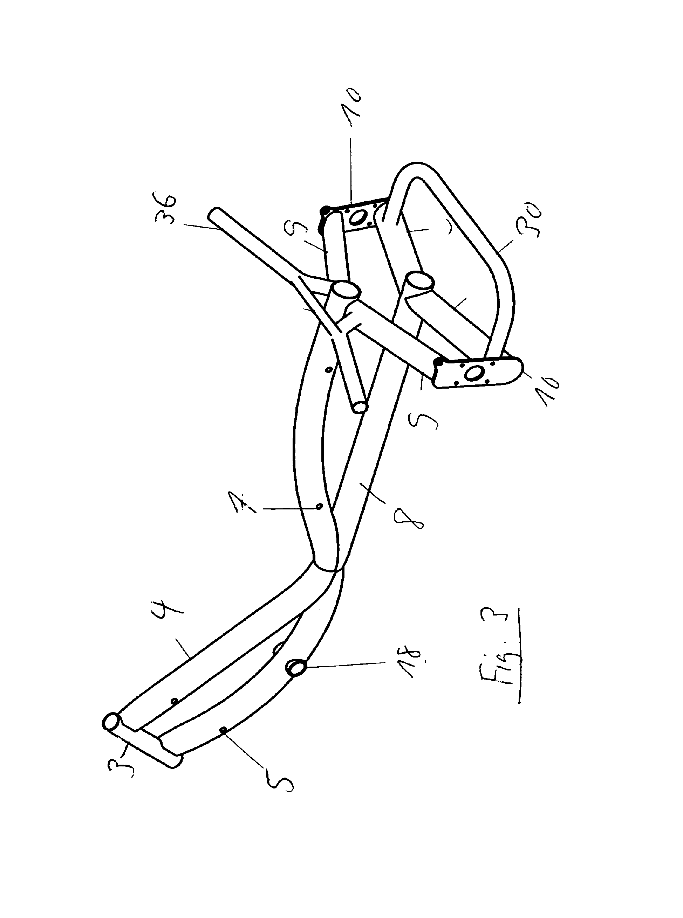

Das Trainingsgerät 1 weist einen Zentralrahmen 2 auf (Figur 3). Der Zentralrahmen 2 ist vorzugsweise aus Aluminium ausgebildet. Er kann aber auch aus Stahl, Carbon, Titan oder glasfaserverstärktem Kunststoff bzw. aus geeigneten Kombinationen der genannten Materialien ausgebildet sein.

Der Zentralrahmen 2 umfasst ein Steuerrohr 3 sowie ein Oberrohr 4 und ein Unterrohr 5. Das Oberrohr 4 und das Unterrohr 5 sind derart ausgebildet, dass sie sich in etwa in einem Einstiegsbereich kreuzen.

Ein hinterer Abschnitt des Unterrohrs 5 bildet in einem in Fahrtrichtung hinteren Bereich des Trainingsgerätes ein Sitzrohr 7 aus. Ein hinterer Bereich des Oberrohrs 4 bildet ein Hinterradrohr 8 aus.

Am Sitzrohr 7 und am Hinterradrohr 8 sind jeweils zwei sich von diesem in etwa in horizontaler Richtung nach außen erstreckende Hinterradstreben 9 angeformt. An den äußeren Enden der Hinterradstreben 9, des Sitzrohrs 7 und des Hinterradrohrs 8 ist jeweils eine Räderschrägstellhalterung 10 ausgebildet.

An der Räderschrägstellhalterung 10 ist jeweils ein Hinterrad 16 drehbar befestigt. Das bedeutet, dass die Hinterräder freilaufend ausgebildet sind. Die Räderschrägstellhalterung 10 ist derart an den Hinterradstreben 9 angeordnet, dass der Winkel zwischen einem Hinterrad 16 und der Vertikalen in etwa 5° bis 12,5° bzw. 7° bis 11° und insbesondere in etwa 10° beträgt. Die Maximale Breite des Trainingsgerätes im Bereich der Hinterräder soll vorzugsweise 80 cm oder weniger betragen, so dass das Trainingsgerät durch Türen hindurch bewegt werden kann.

Weiterhin ist am Sitzrohr 7 jeweils eine, sich von diesem in etwa in horizontaler Richtung nach außen erstreckende, Befestigungsstrebe 35 angeformt. An den äußeren Enden der Befestigungsstreben 35 sind Rücklichter und Schutzbleche fixiert.

Im Bereich des Steuerrohrs 3 ist ein Lenkerschräglager 11 bzw. ein Steuersatz vorgesehen. Über das Lenkerschräglager 11 ist eine Vorderradgabel 12 im Steuerrohr drehbar fixiert.

Die Vorderradgabel 12 bildet in Verbindung mit einem Lenker 13 eine Steuervorrichtung 14 aus. Die Verbindung von Vorderradgabel 12 und Lenker 13 erfolgt über einen Vorbau mit Knickgelenk (nicht dargestellt). Dadurch dass ein Knickgelenk vorgesehen ist, lässt sich ein oberer Abschnitt der Lenkvorrichtung einfach und schnell herunterklappen, so dass die Höhe des Trainingsgerätes verringert wird, um dieses bspw. in einem PKW-Kofferraum unterzubringen. Die Höhe der des Trainingsgerätes beträgt bei heruntergeknickter Steuervorrichtung 14 vom Boden aus in etwa 80 cm bis 100 cm.

In der Vorderradgabel ist ein Laufrad 15 bzw. Vorderrad angeordnet.

Das Vorderrad 15 ist mit einem Radnaben-Elektromotor 17 versehen, der als Gleichstrommotor ausgebildet ist.

Zudem ist am Vorderrad und an den Hinterrädern eine Bremseinrichtung 35 vorgesehen. Das Vorderrad und die Hinterräder weisen als Bremseinrichtung 35 vorzugsweise eine mechanische oder einer hydraulische Scheibenbremse auf. Alternativ kann die Bremseinrichtung auch als Felgen- oder auch als Trommelbremse ausgebildet sein.

Zur Rückgewinnung von Bremsenergie und zur Unterstützung der Vorderradbremse kann bspw. der Radnaben-Elektromotor zur Rekuperation ausgebildet sein, um das Vorderrad abzubremsen. Das bedeutet, dass Bremsenergie in einem Energiespeicher als elektrische Energie speicherbar ist.

In etwa mittig im Unterrohr 5 ist eine Ausnehmung 18 zur Aufnahme eines Tretlagers 19 vorgesehen. Am Tretlager sind zwei Kurbeln 20 mit entsprechenden Pedalen 21 fixiert. Das Tretlager 19 bildet in Verbindung mit den Kurbeln 20 und einem daran fixierten Zahnrad 22 sowie den Pedalen ein Fahrrad-Kurbelsystem 34 aus

Zwischen Oberrohr 4 und Unterrohr 5 ist im Bereich vor dem Fahrrad-Kurbelsystem 34 ein Gleichstromgenerator 24 angeordnet.

Die Kurbeln 20 sind mittels des Zahnrades 22 über einen Zahnriemen 23 mit einem entsprechenden Ritzel (nicht dargestellt) des Gleichstromgenerators 24 gekoppelt. Alternativ kann die Kraftübertragung auch über eine Kette oder direkt über entsprechende Zahnräder erfolgen. Dieses Antriebssystem kann sowohl offen als auch geschlossen bzw. gekapselt ausgebildet sein.

Weiterhin kann ein zusätzliches Getriebe vorgesehen sein. Dieses kann bspw. im Zahnrad 22 oder im Tretlager angeordnet sein und bspw. als ein Planetengetriebe ausgebildet sein.

Am Lenker 13 ist ein Anzeigefeld 25 bzw. ein Display zur Anzeige der Hybrid-Energie-Bilanz befestigt. Es sind entsprechende Sensoren (nicht dargestellt) vorgesehen um Informationen über den Akku-Ladezustand, die Reichweite und die aktuelle Generator-Einspeiseleistung zum Anzeigefeld 25 zu übertragen, sodass diese am Anzeigefeld anzeigbar sind.

Das am Lenker 13 angeordnete Anzeigefeld 25 ist somit zum Anzeigen einer aktuellen Energiebilanz ausgebildet, und weist einen Fahrantrieb-Regler auf, über den die Geschwindigkeit des Trainingsgeräts 1 steuerbar ist.

Am Sitzrohr 7 sind hintereinander mehrere quer zur Fahrtrichtung angeordnete Bohrungen 26 vorgesehen. In den Bohrungen 26 ist eine in Fahrradlängsrichtung verstellbare bzw. verschiebbare, schalenförmig ausgebildete Sitzvorrichtung 28 mittels eines Verriegelungsstiftes fixiert. Zur Führung der Sitzvorrichtung 28 können eine oder mehrere Führungsschienen (nicht dargestellt) vorgesehen sein. Die Sitzvorrichtung 28 ist für den Transport mit wenigen Handgriffen demontierbar. Vorzugsweise weist die Sitzvorrichtung 28 einen Rahmen (nicht dargestellt) auf der mit einer elastischen Bespannung (nicht dargestellt) versehen ist, die eine Sitz- und eine Rückenfläche ausbildet. Eine derartige Bespannung ist witterungsbeständig, wasserabweisend und dämpft die beim Fahren auftretenden Schwingungen und Stöße, sodass diese nicht vollständig auf den Benutzer übertragen werden. Zudem kann Wasser durch in der Bespannung ausgebildete Freiräume von der Sitzfläche ablaufen. Alternativ kann die Sitzvorrichtung 28 auch schalenförmig ausgebildet sein. Die Höhe der Sitzfläche der Sitzvorrichtung 28 entspricht vom Boden einer normalen Stuhlhöhe von 38 cm bis 48 cm und insbesondere von 43 cm. Dies trägt neben dem tiefen Einstiegsbereich zu einem komfortablen, sicheren und einfache Auf- und Absteigen bei.

Die unteren Hinterradstreben 9 sind mit einem sich nach hinten erstreckenden Bügel 30 versehen. Auf dem Bügel 30 sind zwei kastenförmige Akkuaufnahmen 31 fixiert. Somit ist im Bereich zwischen den Hinterrädern eine schachtartige Ausbildung bzw. Akkuaufnahme 31 in Kastenbauweise ausgebildet, in der ein oder mehrere Energiespeicher tief ruhend, wechselbar aufnehmbar sind. Auf diese Weise wird ein tiefer Schwerpunkt des Trainingsgerätes 2 bewirkt.

Vorzugsweise sind in der Akkuaufnahme 31 zwei Energiespeicher 32 zur Speicherung der durch den Generator erzeugten elektrischen Energie und zur Versorgung des Gleichstrom-Radnabenmotors mit elektrischer Energie angeordnet. Die Energiespeicher 32 können mittels eines Schalters entweder parallel geschaltet werden, um die komplette Leistung abzurufen, oder sie werden derart geschaltet, dass ein Akku zur Unterstützung des Fahrbetriebs genutzt wird, während der andere geladen wird. Die Energiespeicher sind vorzugsweise als Lithium-Eisen-Polymer-Akku ausgebildet. Alternativ sind auch andere bekannte Energiespeicher, wie z.B. Lithium-Ionen-Akkus denkbar.

Alternativ kann auch ein Energiespeicher 32 im Bereich des Steuerrohres 3 und ein weiterer im Bereich des Generators 24 angeordnet sein.

Zudem ist ein Steuergerät 33 vorgesehen. Dieses kann bspw. im Bereich der Energiespeicher 32 angeordnet sein.

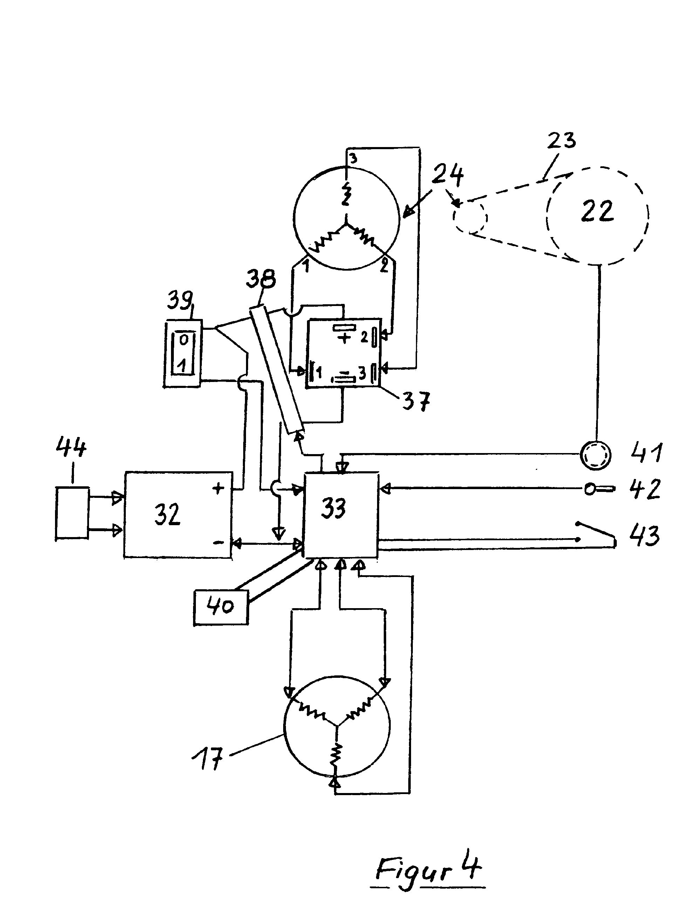

In etwa im Bereich der Sitzvorrichtung 28 ist zwischen dem Sitzrohr 7 und dem Hinterradrohr 8 ein Wahlschalter 29 vorgesehen (nicht in Fig. 4 dargestellt). Der Wahlschalter ist derart angeordnet und ausgebildet, dass er von einem Benutzer auch während der Fahrt auf einfache Art und Weise betätigbar ist. Der Wahlschalter 29 kann auch am Anzeigefeld 25 angeordnet sein. Mittels des Wahlschalters 29 sind die folgenden Betriebszustände wählbar:
(a) Ein Fahrbetrieb bei dem die Energiespeicher je nach Bedarf geladen oder entladen werden (mit und ohne Rekuperation).
(b) Ein Fahrbetrieb ohne Nutzung der Energiespeicher.
(c) Ein Akkuladebetrieb für stationäres Bewegungstraining.
(d) Ein Motorbetrieb, bei dem der Generator angetrieben wird.

Beim Fahrbetrieb (a) wird sowohl die Energie der Energiespeicher 32 als auch die durch das Treten am Generator 24 erzeugte Energie zum Antreiben des Radnaben-Elektromotors 17 verwendet. Wird aufgrund der Fahrbedingungen (beispielsweise Bergabfahrt) am Generator 24 mehr Energie erzeugt, als benötigt wird, dann wird diese Energie zum Laden der Energiespeicher 32 verwendet. Wenn hingegen am Generator 24 weniger Energie als zum Antrieb des Trainingsgerätes 1 benötigt wird, erzeugt wird, dann wird die fehlende Energie aus dem Energiespeicher 32 abgezogen. Der Betriebszustand des Fahrbetriebes kann sowohl mit als auch ohne Rekuperation stattfinden. Ist der Fahrbetrieb auf Fahrbetrieb mit Rekuperation eingestellt, dann wird das Trainingsgerät 1 mittels des Radnaben-Elektromotors 17 gebremst und der hierbei erzeugte Strom in die Energiespeicher 32 eingebracht. Im Fahrbetrieb ohne Rekuperation wird das Trainingsgerät 1 ausschließlich über die Bremsen gebremst.

Beim Fahrbetrieb (b) ohne Nutzung der Energiespeicher wird das Trainingsgerät 1 ausschließlich über die am Generator 24 erzeugte Energie angetrieben.

Beim Akkuladebetrieb (c) dient das Trainingsgerät 1 als stationäre Trainingseinrichtung. Dadurch, dass es ein Dreirad ist, steht es auch im Stillstand stabil und man kann durch Bewegen der Kurbeln 20 ein Bewegungstraining durchführen, wobei bei Bedarf die Energiespeicher 32 geladen werden. Sind die Energiespeicher 32 vollständig geladen dann kann die erzeugte elektrische Energie über einen einstellbaren Lastwiderstand 40 in Wärme umgewandelt werden.

Bei den Betriebszuständen des Fahrbetriebes (a) ist es auch möglich, dass bis zu einer Geschwindigkeit von z.B. 6 km/h das Trainingsgerät 1 ohne Betätigung der Kurbeln 20 mit der Energie aus den Energiespeichern angetreten wird.

Ein Motorbetrieb (d) des Generators 24, um das Kurbelsystem 34 in Drehbewegung zu versetzen. Dies ist insbesondere geeignet für Benutzer die sich im Reha-Training befinden oder Ihre Beine nur sehr eingeschränkt bzw. gar nicht bewegen können.

Der Gleichstromgenerator 24 ist somit derart ausgebildet, dass die erzeugte Energie über elektrische Leitungen und das Steuergerät 33 nach Vorwahl des Wahlschalters 29 an wenigstens einen der Energiespeicher 32 übertragbar ist, oder umgekehrt, dass das Kurbelsystem 34 durch den Generator 24, der damit als Motor genutzt wird, mittels Stromsignalen aus dem Steuergerät 33 angetrieben wird.

Im Folgenden wird der Aufbau des Antriebes anhand eines Schaltbildes beschrieben (Figur 4).

Der Gleichstromgenerator 24 ist mit einem 3-Phasen-Brückengleichrichter 37 verbunden.

Der Brückengleichrichter 37 ist über einen Spannungswandler 38 mit den Energiespeichern 32 und einem Schlossschalter 39 verbunden, wobei der Schlossschalter 39 ebenfalls mit dem Energiespeicher verbunden ist.

Die Energiespeicher 32 ist über das Steuergerät 33 mit dem Radnabenelektromotor 17 verbunden.

Weiterhin ist ein einstellbarer Widerstand, wie z.B. ein Potenziometer 40, mit dem Steuergerät verbunden. Das Potenziometer kann, bspw. im stationären Betrieb, insbesondere wenn beide Energiespeicher 32 vollständig aufgeladen sind, als Lastwiderstand verwendet werden, so dass die mit dem Generator 24 erzeugte Energie zumindest teilweise in Wärme umgesetzt wird. Dies ist vor allem bei der Verwendung des Trainingsgerätes 1 als stationäres Ergometer mit dosierbarem Lastwiderstand zweckmäßig.

An das Steuergerät 33 ist das Anzeigefeld 25 angeschlossen, so dass die entsprechenden Daten, wie Fahrgeschwindigkeit, Ladezustand und dergleichen dargestellt werden.

Im Rahmend der Erfindung ist es auch möglich, dass das Anzeigefeld 25 als berührungsempfindlicher Bildschirm ausgebildet ist, an dem die Parameter des Trainingsgerätes 1 einstellbar sind. Das Anzeigefeld 25 kann somit gleichzeitig auch die Funktion des Wahlschalters 29 ausbilden.

Ein Fahrgeschwindigkeitssensor 41 ist an das Fahrrad-Kurbelsystem 34 gekoppelt, mit welchem die Drehgeschwindigkeit des Kurbelsystems erfasst wird. Die Drehgeschwindigkeit des Kurbelsystems 34 gibt die Soll-Geschwindigkeit vor, mit welchem das Trainingsgerät bewegt werden soll. Das Steuergerät 33 steuert den Radnaben-Elektromotor 17 so, dass er das Trainingsgerät der Soll-Fahrgeschwindigkeit antreibt, sofern ausreichend elektrische Leistung am Generator bzw. an den Energiespeichern zur Verfügung steht. Normalerweise ist dies der Fall. Lediglich bei sehr steilen Fahrten bergauf kann es sein, dass die Energie nicht ausreicht, um die Soll-Geschwindigkeit zu halten.

Bei Geschwindigkeiten bis zu 6 km/h kann das Trainingsgerät auch ohne Betätigung der Kurbeln 20 angetrieben werden. Hierzu ist eine Anfahrhilfe 42 vorgesehen, die einen von Hand betätigbaren Hebel aufweist. Wird dieser Hebel betätigt, dann wird die in den Energiespeichern vorliegende Energie zum Antreiben des Trainingsgerätes verwendet. Bei höheren Geschwindigkeiten ist es zweckmäßig, dass die Geschwindigkeit des Fahrrades über die Betätigung der Kurbeln gesteuert wird.

Weiterhin kann ein Antriebsunterbrecher 43 vorgesehen sein, in Form eines Hebels, mit dem der elektrische Antrieb des Trainingsgerätes unterbrochen werden kann. Im Rahmen der Erfindung ist es möglich, den Hebel kombiniert mit dem Hebel der Bremsen des Trainingsgerätes auszubilden. Beim obigen Ausführungsbeispiel wird die Geschwindigkeit der Kurbeln mittels des Fahrgeschwindigkeitssensors 41 detektiert. Im Rahmen der Erfindung ist es auch möglich, die Drehgeschwindigkeit der Kurbeln 20 anhand der vom Generator 24 zur Verfügung gestellten elektrischen Leistung zu detektieren. Diese elektrische Leistung kann alternativ als Steuergröße zum Steuern der Geschwindigkeit des Bremsgerätes verwendet werden.

Die Energiespeicher 32 sind mittels eines Ladegeräts 44 an herkömmlichen Steckdosen aufladbar.

Gemäß einer alternativen Ausführungsform des erfindungsgemäßen Trainingsgerätes 1 ist das Kurbelsystem 24 in einem Lenkerbereich, insbesondere am Lenker 13 angeordnet, sodass dieses mittels der Arme antreibbar ist.

**Bezugszeichenliste**

| | |
|---|---|
| 1 | Trainingsgerät |
| 2 | Zentralrahmen |
| 3 | Steuerrohr |
| 4 | Oberrohr |
| 5 | Unterrohr |
| 6 | Einstiegsbereich |
| 7 | Sitzrohr |
| 8 | Hinterradrohr |
| 9 | Hinterradstreben |
| 10 | Räderschrägstellhalterung |
| 11 | Lenkerschräglager |
| 12 | Vorderradgabel |
| 13 | Lenker |
| 14 | Steuervorrichtung |
| 15 | Laufrad |
| 16 | Hinterrad |
| 17 | Radnaben-Elektromotor |
| 18 | Ausnehmung |
| 19 | Tretlager |
| 20 | Kurbel |
| 21 | Pedal |
| 22 | Zahnrad |
| 23 | Zahnriemen |
| 24 | Gleichstromgenerator |
| 25 | Anzeigefeld |
| 26 | Bohrung |
| 27 | Verriegelungsstift |
| 28 | Sitzvorrichtung |
| 29 | Wahlschalter |
| 30 | Bügel |
| 31 | Akkuaufnahme |
| 32 | Energiespeicher |
| 33 | Steuergerät |
| 34 | Fahrrad-Kurbelsystem |
| 35 | Bremseinrichtung |
| 36 | Befestigungsstrebe |
| 37 | 3-Phasen-Brückengleichrichter |
| 38 | Spannungswandler |
| 39 | Schlossschalter |
| 40 | Potenziometer |
| 41 | Fahrgeschwindigkeitssensor |
| 42 | Anfahrhilfe |
| 43 | Antriebsunterbrecher |
| 44 | Ladegerät |

## Patentansprüche

1. Trainingsgerät umfassend
einen Zentralrahmen
zwei am Zentralrahmen angeordnete Hinterräder,
eine Sitzvorrichtung,
eine Lenkvorrichtung mit Vorderradgabel, Lenkerschräglager und Lenker, zumindest ein an der Vorderradgabel angeordnetes Vorderrad, und
ein Fahrrad-Kurbelsystem das mit einem Generator gekoppelt ist
**dadurch gekennzeichnet,**
**dass** am Vorderrad als Antrieb ein Radnaben-Elektromotor vorgesehen ist.

2. Trainingsgerät gemäß Anspruch 1,
**dadurch gekennzeichnet,**
**dass** der Zentralrahmen derart ausgebildet ist, dass die maximale Höhe eines Einstiegsbereichs, wobei der Einstiegsbereich ein Bereich zwischen Lenkvorrichtung und Sitzvorrichtung oberhalb des Zentralrahmens ausgebildet ist, in vertikaler Richtung in etwa im Bereich des Fahrrad-Kurbelsystems angeordnet ist.

3. Trainingsgerät gemäß Anspruch 1 oder 2,
**dadurch gekennzeichnet,**
**dass** der Generator im Bereich zwischen Fahrrad-Kurbelsystem und dem Vorderrad angeordnet ist

4. Trainingsgerät gemäß einem der Ansprüche 1 bis 3,
**dadurch gekennzeichnet,**
**dass** die Sitzvorrichtung am Zentralrahmen im Bereich zwischen den Hinterrädern angeordnet ist, wobei die Position der Sitzvorrichtung in Längsrichtung des Trainingsgeräts verstellbar ist

5. Trainingsgerät gemäß einem der Ansprüche 1 bis 4,
**dadurch gekennzeichnet,**
**dass** am Zentralrahmen zur Aufnahme der Hinterräder zwei Hinterrad Schrägstellhalterungen vorgesehen sind,

6. Trainingsgerät gemäß Anspruch 5,
**dadurch gekennzeichnet,**
**dass** die Schrägstellung der Hinterräder eine Abweichung von 10° gegenüber der Vertikalen beträgt.

7. Trainingsgerät gemäß einem der Ansprüche 1 bis 6,
**dadurch gekennzeichnet,**
**dass** im Bereich zwischen den Hinterrädern eine schachtartige Akkuaufnahme in Kastenbauweise ausgebildet ist, in der ein oder mehrere Energiespeicher tief ruhend, wechselbar aufnehmbar sind.

8. Trainingsgerät gemäß einem der Ansprüche 1 bis 7,
**dadurch gekennzeichnet,**
**dass** der Gleichstromgenerator über einen Endlosriemen, eine Endloskette oder mittels zumindest zweier Zahnräder unmittelbar mit dem Kurbel-System verbindbar ist.

9. Trainingsgerät gemäß einem der Ansprüche 1 bis 8,
**dadurch gekennzeichnet,**
**dass** der Radnaben-Elektromotor zur Rekuperation ausgebildet ist.

10. Trainingsgerät gemäß einem der Ansprüche 1 bis 9,
**dadurch gekennzeichnet,**
**dass** ein Bremseinrichtung am Vorderrad und/oder an den Hinterrädern vorgesehen ist.

11. Trainingsgerät gemäß einem der Ansprüche 1 bis 10,
**dadurch gekennzeichnet,**
**dass** die Hinterräder freilaufend ausgebildet sind.

12. Trainingsgerät gemäß einem der Ansprüche 1 bis 11,
**dadurch gekennzeichnet,**
**dass** der Generator über Pedale des Kurbelsystems in einem Fußbereich mittels der Beine und/oder in einem Lenkerbereich mittels der Arme antreibbar ist.

13. Trainingsgerät gemäß einem der Ansprüche 1 bis 14,
**dadurch gekennzeichnet,**
**dass** der Gleichstromgenerator derart ausgebildet ist, dass die erzeugte Energie über elektrische Leitungen und ein Steuergerät nach Vorwahl des Schalters an wenigstens einen der Akku-Energiespeicher übertragbar ist, oder umgekehrt, dass das KurbelSystem durch den Generator, der damit als Motor genutzt wird, mittels Stromsignalen aus dem Steuergerät angetrieben wird.

14. Trainingsgerät gemäß einem der Ansprüche 1 bis 13,
**dadurch gekennzeichnet,**
**dass** ein Wahlschalter vorgesehen ist über den ein Standbetrieb mit Akkuladefunktion und ohne Radantrieb, ein Fahrbetrieb mit gespeicherter Akkuenergie oder mit zusätzlicher, aktiver Generator-Leistungseinspeisung bzw. mit Hybridfunktion wählbar ist.

15. Trainingsgerät gemäß einem der Ansprüche 1 bis 14,
**dadurch gekennzeichnet,**
**dass** das am Lenker ein Anzeigefeld vorgesehen ist, dass zum Anzeigen einer aktuellen Energiebilanz ausgebildet ist, und einen Fahrantrieb-Regler aufweist, über den die Geschwindigkeit des Trainingsgeräts steuerbar ist.
